# EUROPÄISCHE PATENTSCHRIFT

(11) **EP 2 827 464 B1**
(45) Veröffentlichungstag und Bekanntmachung des Hinweises auf die Patenterteilung: **24.02.2016**
(21) Anmeldenummer: 14167614.8
(22) Anmeldetag: 09.05.2014
(51) Int. Cl.: H02G 3/14, H02G 3/12, H05K 7/20, H02G 3/04

(54) **Elektrisches/elektronisches Installationsgerät**
Electric/electronic installation device
Appareil d'installation électrique/électronique

(30) Priorität: 19.07.2013 DE 102013107706
(43) Veröffentlichungstag der Anmeldung: 21.01.2015
(73) Patentinhaber: Insta Elektro GmbH, 58509 Lüdenscheid (DE)
(72) Erfinder: Bröer, Stefan, 58579 Schalksmühle (DE)

(56) Entgegenhaltungen:
- DE-A1- 4 223 522
- DE-A1-102006 040 686
- DE-A1-102008 035 722

## Beschreibung

Die vorliegende Erfindung geht von einem gemäß Oberbegriff des Hauptanspruches konzipierten elektrischen/elektronischen Installationsgerät der Gebäudesystemtechnik aus.

Derartige elektrische/elektronische Installationsgeräte sind in der Regel dafür vorgesehen, auf besonders komfortable Art und Weise eine Vielzahl von in Gebäuden installierte Aktoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer usw. bekannt geworden. Oftmals sind solche elektrischen/elektronischen Installationsgeräte zum Anschluss an ein Bussystem vorgesehen.

Durch die DE 10 2008 035 722 B4 ist ein dem Oberbegriff des Hauptanspruches entsprechendes elektrisches/elektronisches Installationsgerät bekannt geworden. Dieses elektrische/elektronische Installationsgerät ist für den Anschluss an ein Bussystem der Gebäudesystemtechnik vorgesehen und weist deshalb entsprechende Anschlusskontakte auf. Des Weiteren weist dieses elektrische/elektronische Installationsgerät ein aus Kunststoff bestehendes, zur Aufnahme der Funktionselemente vorgesehenes Gehäuse auf, wobei mehrere Funktionselemente auf einer im Gehäuse festgelegten elektrischen Leiterplatte angeordnet sind. Das Gehäuse ist an seiner Oberseite mit einer aus Metall bestehenden Tragplatte bestückt. Einige Funktionselemente eines solchen elektrischen/elektronischen Installationsgerätes erzeugen insbesondere während des Funktionsbetriebs Wärme, die an die Umgebung abgeführt werden muss. Oftmals ist dies jedoch nur durch eine komplexe Ausgestaltung des elektrischen/elektronischen Installationsgerätes möglich, damit es durch den Betrieb nicht zu einer Überhitzung einzelner Funktionselemente bzw. des elektrischen/elektronischen Installationsgerätes kommen kann. Außerdem ist es oftmals schwierig, bei der Montage auf einfache Art und Weise dafür Sorge zu tragen, dass die Wärme erzeugenden Funktionselemente ausreichend wirkungsvoll an die, Wärme an die Umgebung abgebende, Tragplatte angebunden werden.

Ausgehend von einem derart ausgebildeten elektrischen/elektronischen Installationsgerät liegt der vorliegenden Erfindung die Aufgabe zugrunde, ein elektrisches/elektronisches Installationsgerät zu schaffen, bei welchem auf besonders einfache Art und Weise dafür Sorge getragen ist, dass die, von den Funktionselementen erzeugte Wärme auf besonders effektive Art und Weise an die Umgebung abgeführt wird.

Erfindungsgemäß wird diese Aufgabe durch die im Hauptanspruch angegebenen Merkmale gelöst.

Bei einer solchen Ausbildung ist besonders vorteilhaft, dass die zur effektiven Wärmeabfuhr notwendigen Bauteile einen besonders einfachen, kostengünstigen Aufbau aufweisen und sich auf besonders einfache Art und Weise sowohl von Hand, als auch von einem Montageautomaten funktionsgerecht montieren lassen.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:

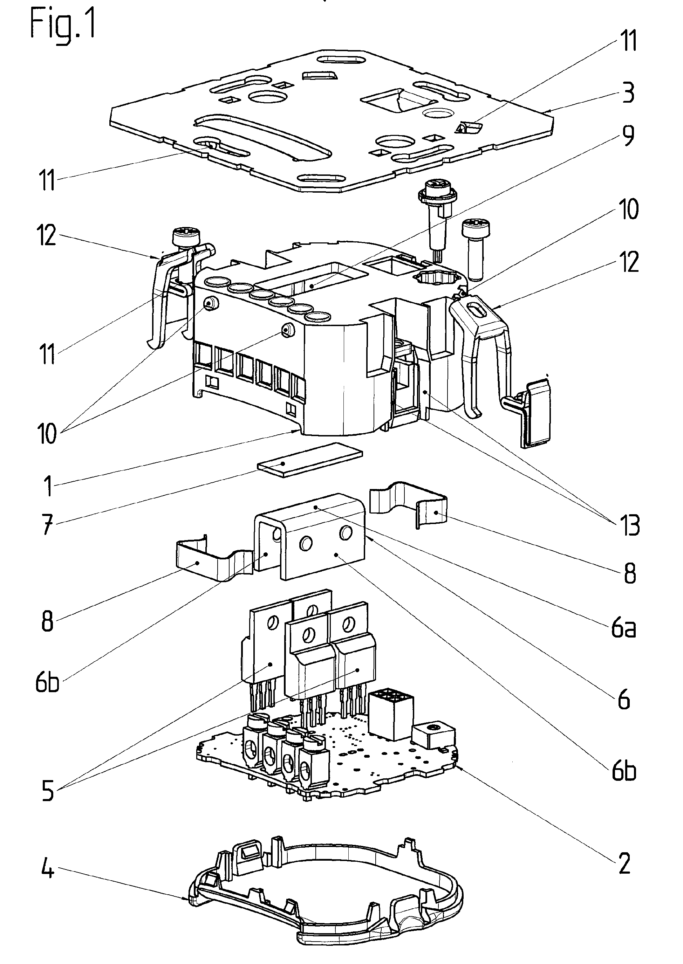

- Fig. 1:: prinziphaft ein solches elektrisches/elektronisches Installationsgerät räumlich in Explosionsdarstellung;

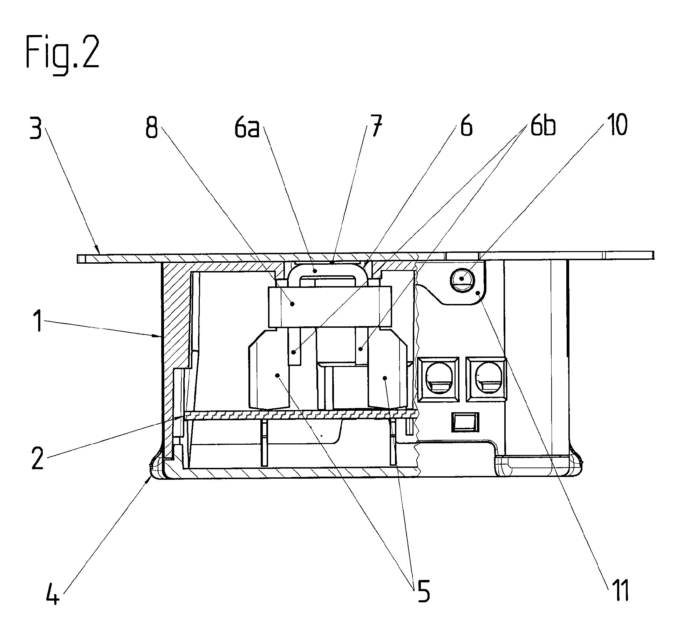

- Fig. 2:: prinziphaft einen Zusammenbau eines entsprechend Figur 1 ausgeführten elektrischen/elektronischen Installationsgerätes im Teilschnitt.

Wie aus den Figuren hervorgeht, besteht ein solches elektrisches/elektronisches Installationsgerät im Wesentlichen aus einem aus Kunststoff bestehenden, zur Aufnahme der Funktionselemente vorgesehenen Gehäuse 1, wobei mehrere Funktionselemente zumindest auf einer im Gehäuse 1 festgelegten Leiterplatte 2 angeordnet sind. An die Oberseite des Gehäuse 1 ist eine aus Metall bestehende Tragplatte 3 angebracht, andererseits ist das Gehäuse 1 durch einen an der Unterseite festgelegten Deckel 4 verschlossen. Um eine gute Wärmeableitung an die Umgebung und gleichzeitig eine hohe Tragplattenstabilität zu gewährleisten, besteht die Tragplatte 3 aus Stahl.

Wie des Weiteren aus den Figuren hervorgeht, ist das Gehäuse 1 zur Aufnahme mehrerer Funktionselemente 5 vorgesehen, die auf der im Gehäuse 1 festgelegten elektrischen Leiterplatte 2 angeordnet sind. Die eine vergleichsweise große Wärmemenge abgebenden Funktionselemente 5 sind dabei so angeordnet, dass über zumindest eine ihrer Außenflächen eine Wärme leitende Verbindung mit der Tragplatte 3 hergestellt ist. Zu diesem Zweck ist zwischen den vier fußseitig auf der Leiterplatte 2 angeordneten, größere Wärmemengen abgebenden, Funktionselementen 5 ein U-förmig ausgebildeter Wärmeleitkörper 6 angeordnet. Mit seinem Basisschenkel 6a steht der Wärmeleitkörper 6 über ein elastisch verformbares Wärmeleitelement 7 mit der Tragplatte 3 Wärme leitend in Verbindung. Die vier zugeordneten Funktionselemente 5 kommen je mit ihrer Rückseite an einen der beiden Seitenschenkel 6b des Wärmeleitkörpers 6 Wärme leitend zur Anlage. Um eine besonders effektive Wärmeübertragung zu gewährleisten, werden jeweils zwei Funktionselemente 5 federbeaufschlagt von einer Federklammer 8 umfasst und dadurch an die Seitenschenkel 6b des Wärmeleitkörpers 6 gepresst. Ebenfalls zur effektiven Wärmeübertragung ist das elastisch verformbare Wärmeleitelement 7 vorgesehen, was für eine optimale Ankopplung des Basisschenkels 6a an die Tragplatte 3 Sorge trägt. Zudem ist, um eine optimale Ankopplung des Basisschenkels 6a an die Tragplatte 3 zu realisieren, in der Wand des Gehäuses 1, die der Tragplatte 3 zugewandt ist, eine Öffnung 9 vorhanden. Der Wärmeleitkörper 6 kann gänzlich durch diese Öffnung 9 hindurchtauchen, um lediglich über das Wärmeleitelement 7 mit der Tragplatte 3 in Verbindung zu kommen.

Zur Vereinfachung der Montage ist es vorgesehen, die vier größere Wärmemengen abgebenden Funktionselemente 5, den Wärmeleitkörper 6, die beiden Federklammern 8 und gegebenenfalls das Wärmeleitelement 7 zu einer Montagebaugruppe zusammenzufassen, die in einem einzigen Montagevorgang auf der elektrischen Leiterplatte 2 funktionsgerecht festgelegt wird.

Um eine sichere Festlegung der Tragplatte 3 am Gehäuse zu gewährleisten und damit auch für eine dauerhafte effektive Wärmeankopplung des Wärmeleitkörpers 6 Sorge zu tragen, sind am Gehäuse 1 vier erste Rastelelemente 10 ausgebildet, welche kooperierend mit jeweils einem entsprechend ausgebildeten zweiten Rastelement 11 der Tragplatte 3 in Wirkverbindung kommen. Zur geschützten Aufnahme der beiden, zur ordnungsgemäßen Befestigung des elektrischen/elektronischen Installationsgerätes in einer zugehörigen Installationsdose notwendigen Spreizkrallen 12 sind zudem vier Aufnahmeausnehmungen 13 in das Gehäuse 1 eingeformt.

Auf einfache Art und Weise ist somit ein elektrisches/elektronisches Installationsgerät geschaffen, bei welchem auf besonders einfache Art und Weise dafür Sorge getragen ist, dass die von den Funktionselementen 5 erzeugte Wärme auf besonders effektive Art und Weise an die Umgebung abgeführt wird. Vorteilhafterweise kommen dabei besonders einfach und kostengünstig herstellbare und auf besonders einfache Art und Weise montagetechnisch handhabbare Bauteile zum Einsatz.

### Bezugszeichenliste:

- 1: Gehäuse
- 2: Leiterplatte
- 3: Tragplatte
- 4: Deckel
- 5: Funktionselemente
- 6: Wärmeleitkörper
- 6a: Basisschenkel
- 6b: Seitenschenkel
- 7: Wärmeleitelement
- 8: Federklammer
- 9: Öffnung
- 10: erste Rastelemente
- 11: zweite Rastelemente
- 12: Spreizkralle
- 13: Aufnahmeausnehmung

## Patentansprüche

1. Elektrisches/elektronisches Installationsgerät für die Gebäudesystemtechnik mit einem aus Kunststoff bestehenden, zur Aufnahme von Funktionselementen vorgesehenen Gehäuse, wobei mehrere Funktionselemente auf zumindest einer im Gehäuse festgelegten elektrischen Leiterplatte angeordnet sind und wobei an der Oberseite des Gehäuses eine aus Metall bestehende Tragplatte angebracht ist und wobei die elektrische Leiterplatte mit ihren Funktionselementen derart vom Gehäuse aufgenommen ist, dass mehrere auf der Leiterplatte angeordnete Funktionselemente über ihre Außenflächen Wärme leitend mit der aus Metall bestehenden Tragplatte in Verbindung stehen, **dadurch gekennzeichnet, dass** zwischen zumindest zwei fußseitig auf der Leiterplatte (2) angeordneten Funktionselementen (5) zumindest ein U-förmig ausgebildeter Wärmeleitkörper (6) angeordnet ist, der mit seinem Basisschenkel (6a) mit der Tragplatte (3) und der mit seinen beiden Seitenschenkeln (6b) je mit der Rückseite zumindest eines Funktionselementes (5) Wärme leitend in Verbindung steht.

2. Elektrisches/elektronisches Installationsgerät nach Anspruch 1, **dadurch gekennzeichnet, dass** zwischen dem Basisschenkel (6a) des zumindest einen Wärmeleitkörpers (6) und der Tragplatte (3) zumindest ein elastisch verformbares Wärmeleitelement (7) angeordnet ist.

3. Elektrisches/elektronisches Installationsgerät nach einem der Ansprüche 1 oder 2, **dadurch gekennzeichnet, dass** zumindest zwei Funktionselemente (5) von zumindest einer Federklammer (8) umfasst und dadurch federbeaufschlagt an einen der beiden Seitenschenkel (6b) des Wärmeleitkörpers (6) angepresst werden.

4. Elektrisches/elektronisches Installationsgerät nach einem der Ansprüche 1 bis 3, **dadurch gekennzeichnet, dass** oberseitig in der, der Tragplatte (3) zugewandten Wand des Gehäuses (1) eine, den Durchtritt des Wärmeleitkörpers (6) ermöglichende Öffnung (9) vorhanden ist.

5. Elektrisches/elektronisches Installationsgerät nach einem der Ansprüche 1 bis 4, **dadurch gekennzeichnet, dass** die Tragplatte (3) zumindest ein, mit zumindest einem, am Gehäuse (1) vorhandenen ersten Rastelement (10) in Wirkverbindung kommendes, kooperierendes zweites Rastelement (11) aufweist.

6. Elektrisches/elektronisches Installationsgerät nach einem der Ansprüche 1 bis 5, **dadurch gekennzeichnet, dass** zur geschützten Aufnahme zumindest einer Spreizkralle (12) zumindest eine Aufnahmeausnehmung (13) in das Gehäuse (1) eingeformt ist.

## Claims

1. Electric/electronic installation device for building system engineering with a plastic housing to take up functional elements, wherein several functional elements are arranged on at least one electric PCB fixed in the housing and wherein at the upper side of the housing a metal bearing plate is fixed and wherein the electric PCB with its functional elements is taken up by the housing in such a way that several functional elements arranged on the PCB are connected by their outer surfaces with the metal bearing plate, in a way to conduct heat, **characterized by** the fact that between at least two functional elements (5) arranged at the bottom end of the PCB (2) at least one U-shaped heat conducting element (6) is arranged which with its basic flank (6a) is connected with the bearing plate (3) and with each of its two lateral flanks (6b) is connected with the back of at least one functional element (5) in a way to conduct heat.

2. Electric/electronic installation device in accordance with Claim 1, **characterized by** the fact that between the basic flank (6a) of the at least one heat conducting element (6) and the bearing plate (3) at least one elastically formable heat conducting element (7) is arranged.

3. Electric/electronic installation device in accordance with any of Claims 1 or 2, **characterized by** the fact that at least two functional elements (5) are embraced by at least one spring bracket (8) and thus are pressed by spring force to one of the two lateral flanks (6b) of the heat conducting element (6).

4. Electric/electronic installation device in accordance with any of Claims 1 to 3, **characterized by** the fact that in the upper side of the housing (1), facing the bearing plate (3), an opening (9) is provided, allowing to pass through the heat conducting element (6).

5. Electric/electronic installation device in accordance with any of Claims 1 to 4, **characterized by** the fact that the bearing plate (3) provides at least one second arrester (11), acting together and cooperating with at least one first arrester (10) at the housing.

6. Electric/electronic installation device in accordance with any of Claims 1 to 5, **characterized by** the fact that to provide a protected place for the spreading claw (12) at least one recession (13) is formed into the housing (1).

## Revendications

1. Appareil d'installation électrique/électronique pour la domotique avec un boîtier en matière plastique, conçu pour loger des éléments fonctionnels, plusieurs éléments fonctionnels étant disposés sur au moins une carte de circuit imprimé électrique fixée dans le boîtier et la carte de circuit imprimé électrique avec ses éléments fonctionnels étant logée dans le boîtier de telle sorte que plusieurs éléments fonctionnels disposés sur la carte de circuit électrique sont connectés avec la plaque de support en métal conduisant la chaleur sur ses faces externes, **caractérisé en ce qu'**entre au moins deux éléments fonctionnels (5) disposés côté pied sur la carte de circuit imprimé (2) il y a au moins un corps thermoconducteur (6) configuré en U qui est relié en conduisant la chaleur avec sa branche de base (6a) avec la plaque de support (3) et avec ses deux branches latérales (6b) respectivement avec la face arrière au moins d'un élément fonctionnel (5).

2. Appareil d'installation électrique/électronique selon la revendication 1, **caractérisé en ce qu'**au moins un élément thermoconducteur (7) déformable est disposé entre la branche de base (6a) d'au moins un corps thermoconducteur (6) et la plaque de support (3).

3. Appareil d'installation électrique/électronique selon la revendication 1 ou 2, **caractérisé en ce qu'**au moins deux éléments fonctionnels (5) sont tenus embrassés par au moins une pince à ressort (8) et, ainsi soumis à l'action du ressort, sont pressés sur l'une des deux branches latérales (6b) du corps thermoconducteur (6).

4. Appareil d'installation électrique/électronique selon l'une des revendications 1 à 3, **caractérisé en ce que**, sur la face supérieure, dans la paroi du boîtier (1) tournée vers la plaque de support (3) il y a une ouverture (9) permettant le passage du corps thermoconducteur (6).

5. Appareil d'installation électrique/électronique selon l'une des revendications 1 à 4, **caractérisé en ce que** la plaque de support (3) présente au moins un, avec au moins un second élément d'encliquetage(11) coopérant en liaison active avec un premier élément d'encliquetage (10) existant sur le boîtier (1).

6. Appareil d'installation électrique/électronique selon l'une des revendications 1 à 5, **caractérisé en ce que**, pour le logement protégé d'au moins une griffe rétractable (12), au moins un évidement de logement (13) est formé dans le boîtier (1).
